# EUROPEAN PATENT APPLICATION

(11) **EP 4 759 755 A1**
(43) Date of publication of application: **17.06.2026**
(21) Application number: 24869423.4
(22) Date of filing: 19.12.2024
(51) Int. Cl.: B65G 1/08

(54) **TEMPORARY STORAGE STATION, GOODS REPLENISHMENT DEVICE, AND AUTOMATED GOODS REPLENISHMENT SYSTEM**

(30) Priority: 31.10.2024 CN 202411548122; 31.10.2024 CN 202422661238 U
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: WANG, Guopeng, Beijing 100176 (CN)
(74) Representative: Gamba, Alessandro
(86) International application number: PCT/CN2024/140649
(87) International publication number: WO 2026/091261

(57) **Abstract**

Provided are a buffer station, a replenishment device and an automatic replenishment system. The buffer station includes a buffer shelf (110) and a door assembly (120). A buffer lane (111) is disposed slantedly on the buffer shelf (110) and includes a cargo receiving port (113) located at a low position of the buffer lane (111). The door assembly (120) includes an upper door plate (121) rotatably connected to the cargo collection port (113). The upper door plate (121) has an open position where the cargo collection port (113) is opened and a closed position where the cargo collection port (113) is closed.

## Description

This application claims priority to Chinese Patent Application No. 202411548122.4 filed with the China National Intellectual Property Administration (CNIPA) on Oct. 31, 2024, the disclosure of which is incorporated herein by reference in its entirety.

### TECHNICAL FIELD

The present application relates to the field of automatic replenishment technology, for example, a buffer station, a replenishment device and an automatic replenishment system.

### BACKGROUND

An automatic picking system is a system that directly picks up cargos from storage shelves of the automatic picking system according to order information and directly packages all the target cargos that are picked up out of a warehouse after the order is completed. The automatic picking system mainly includes storage shelves and a picking mechanism. The automatic picking system needs to replenish the storage shelves regularly to cope with future order demands. In the related art, a replenishment apparatus for replenishing storage shelves exists, and cargos on the replenishment apparatus are generally replenished manually. The manual replenishment method for the replenishment apparatus has the following disadvantages: a worker responsible for the replenishment needs to stay near the device all the time to replenish the replenishment apparatus at any time, and the replenishment is performed through throwing one by one, which not only causes a relatively long loading time each time that affects the efficiency of an automatic picking system in collecting cargos from the replenishment apparatus but also causes a replenishment process that needs a large amount of manual participation and may cause an injury to a worker and relatively poor safety.

### SUMMARY

The present application provides a buffer station. The buffer station can store a large number of cargos. A process of releasing the cargos is not only continuous and efficient but is also safe and reliable.

The present application provides a replenishment device. The replenishment device can efficiently and safely collect cargos from a buffer station.

The present application provides an automatic replenishment system. A replenishment device of the automatic replenishment system has high efficiency in collecting cargos from a buffer station and has safety and reliability.

A buffer station includes a buffer shelf and a door assembly. A buffer lane is disposed slantedly on the buffer shelf and includes a cargo collection port located at a low position of the buffer lane. The door assembly includes an upper door plate rotatably connected to the cargo collection port. The upper door plate has an open position where the cargo collection port is opened and a closed position where the cargo collection port is closed. A cargo located in the buffer lane is capable of passing through the opened cargo collection port under gravity.

In an embodiment, the buffer shelf includes a buffer bottom plate for forming a bottom surface of the buffer lane, where an included angle between a short side of the buffer bottom plate and a horizontal line is an acute angle.

In an embodiment, multiple buffer lanes are disposed on the buffer shelf, an upper door plate is disposed at a cargo collection port of each of the multiple buffer lanes, and at least part of the multiple upper door plates are capable of switching to an open position simultaneously.

In an embodiment, the door assembly further includes a reset elastic member, where the reset elastic member has a tendency to reset the upper door plate to the closed position.

In an embodiment, the upper door plate includes a blocking part and an abutment portion that are connected to each other at an angle, where the blocking part is configured to block the cargo collection port; the door assembly further includes a flipping member, and the flipping member includes a push plate rotatably connected to the buffer shelf, where the push plate abuts against the abutment portion, the reset elastic member is connected between the push plate and the buffer shelf, and a force is applied to the push plate to cause the push plate to rotate so that the upper door plate is capable of switching from the closed position to the open position and the reset elastic member is compressed.

In an embodiment, the flipping member further includes a connecting rod and a rotating wheel, where the connecting rod is connected to the push plate, and the rotating wheel is rotatably connected to the connecting rod and rolls on the abutment portion.

In an embodiment, multiple buffer lanes are disposed on the buffer shelf, an upper door plate is disposed at a cargo collection port of each of the multiple buffer lanes, and two rotating wheels are disposed and roll on abutment portions of two adjacent upper door plates, respectively.

A replenishment device is configured to collect a cargo from the above buffer station. The replenishment device includes a replenishment device body and a door pushing assembly. A replenishment lane is disposed slantedly on the replenishment device body and includes a cargo receiving port located at a high position of the replenishment lane. The replenishment device is capable of moving to a replenishment position where the cargo receiving port is directly opposite to the cargo collection port. The door pushing assembly is capable of driving the upper door plate to switch from the closed position to the open position so that the cargo receiving port and the cargo collection port are docked and connected.

In an embodiment, the door assembly further includes a push plate rotatably connected to the buffer shelf and abutting against the upper door plate, and the door pushing assembly includes a door pushing driving member and a push member, where the door pushing driving member is drivingly connected to the push member and is configured to drive the push member to move linearly, and the push member is capable of causing the upper door plate to switch from the closed position to the open position by pushing the push plate to rotate.

In an embodiment, the replenishment device body includes a lane bottom plate for forming a bottom surface of the replenishment lane, where the upper door plate at the open position is capable of overlapping the lane bottom plate.

In an embodiment, the upper door plate includes a protruding portion overlapping the lane bottom plate, and the replenishment device further includes an in-place detection member disposed at an end of the lane bottom plate and configured to detect the protruding portion.

In an embodiment, the door pushing assembly is capable of driving at least two upper door plates to switch from the closed position to the open position simultaneously.

In an embodiment, the replenishment device body includes a lane bottom plate and two lane side plates. The lane bottom plate and the two lane side plates are for forming the replenishment lane, where at least one of the two lane side plates is capable of moving to adjust a width of the replenishment lane and/or align the cargo entering the replenishment lane.

In an embodiment, the replenishment device further includes a variable pitch driving member, and the variable pitch driving member includes a variable pitch motor, a lead screw and a nut block, where a motor shaft of the variable pitch motor is drivingly connected to an end of the lead screw, the nut block is threadedly connected to the lead screw to form a lead screw nut pair with the lead screw, and the nut block is connected to the movable lane side plate; and/or the replenishment device further includes a side plate detection member, where the side plate detection member is disposed on the replenishment device body and is configured to detect the lane side plate reset to an initial position.

An automatic replenishment system includes the above buffer station and the above replenishment device.

### BRIEF DESCRIPTION OF DRAWINGS

FIG. 1 is a schematic diagram of an automated warehouse according to an embodiment of the present application.
FIG. 2 is a schematic diagram of a replenishment apparatus according to an embodiment of the present application.
FIG. 3 is a schematic view of a buffer station at an angle of view according to an embodiment of the present application.
FIG. 4 is a side view of a buffer station according to an embodiment of the present application.
FIG. 5 is a schematic view of a buffer station at another angle of view according to an embodiment of the present application.
FIG. 6 is a schematic diagram of an upper door plate of a door assembly at a closed position according to an embodiment of the present application.
FIG. 7 is a schematic diagram of an upper door plate of a door assembly at an open position according to an embodiment of the present application.
FIG. 8 is a schematic view of a door assembly at an angle of view according to an embodiment of the present application.
FIG. 9 is a schematic view of a door assembly at another angle of view according to an embodiment of the present application.
FIG. 10 is a schematic diagram of a buffer bottom plate and a buffer side plate according to an embodiment of the present application.
FIG. 11 is a schematic view of a door assembly with two upper door plates that can be opened and closed simultaneously at an angle of view according to an embodiment of the present application.
FIG. 12 is a schematic view of a door assembly with two upper door plates that can be opened and closed simultaneously at another angle of view according to an embodiment of the present application.
FIG. 13 is a schematic diagram illustrating that a replenishment apparatus has two replenishment devices with two replenishment lanes that are one wide replenishment lane and one narrow replenishment lane according to an embodiment of the present application.
FIG. 14 is a schematic view of the structure shown in FIG. 13 from another angle of view.
FIG. 15 is a schematic diagram illustrating that a replenishment apparatus has two replenishment devices and two replenishment lanes are both wide lanes according to an embodiment of the present application.
FIG. 16 is a schematic view of the structure shown in FIG. 15 from another angle of view.
FIG. 17 is a schematic view of a replenishment device at an angle of view according to an embodiment of the present application.
FIG. 18 is a schematic view of a replenishment device at another angle of view according to an embodiment of the present application.
FIG. 19 is a schematic view of a replenishment device at another angle of view according to an embodiment of the present application.
FIG. 20 is a schematic diagram of a partial structure of a replenishment device according to an embodiment of the present application.
FIG. 21 is a schematic diagram of a drive assembly and a lower door plate according to an embodiment of the present application.
FIG. 22 is a top view of the structure shown in FIG. 21.
FIG. 23 is a schematic diagram illustrating that an upper door plate at an open position overlaps a lane bottom plate of a replenishment lane according to an embodiment of the present application.
FIG. 24 is a schematic diagram of a protruding portion of an upper door plate covering an in-place detection member according to an embodiment of the present application.
FIG. 25 is a schematic diagram illustrating that a lower door plate is separately adapted to a narrow lane and a wide lane according to an embodiment of the present application.
FIG. 26 is a schematic diagram illustrating that a cargo detection member faces a storage lane and detects cargos in the storage lane according to an embodiment of the present application.
FIG. 27 is a schematic diagram illustrating that an inventory device performs inventory check on cargos in a storage lane according to an embodiment of the present application.
FIG. 28 is a schematic diagram of an inventory device according to an embodiment of the present application.
FIG. 29 is an enlarged view of part A in FIG. 28.
FIG. 30 is an enlarged view of part B in FIG. 28.
FIG. 31 is a schematic diagram of an extending structure of an inventory device according to an embodiment of the present application when the extending structure is not extended.
FIG. 32 is a schematic diagram of a track member according to an embodiment of the present application.

### Reference list

- 100: buffer station
- 110: buffer shelf
- 111: buffer lane
- 112: replenishment port
- 113: cargo collection port
- 114: front cross beam

- 115: buffer bottom plate
- 116: buffer side plate
- 120: door assembly
- 121: upper door plate
- 1211: blocking part
- 12111: protruding portion
- 1212: abutment portion
- 122: flipping member
- 1221: push plate
- 1222: connecting rod
- 1223: rotating wheel
- 123: reset elastic member
- 124: hinge
- 125: rotating shaft
- 130: support frame
- 200: replenishment device
- 210: replenishment device body
- 211: replenishment lane
- 212: cargo receiving port
- 213: cargo discharge outlet
- 214: lane bottom plate

- 215: lane side plate
- 220: door pushing assembly
- 221: door pushing driving member
- 222: push member
- 230: in-place detection member
- 240: variable pitch driving member
- 241: variable pitch motor
- 242: lead screw
- 243: nut block
- 244: conveyor belt mechanism
- 2441: drive pulley
- 2442: driven pulley
- 2443: conveyor belt
- 245: connection push plate
- 250: variable pitch mounting bracket
- 251: cross beam member
- 252: side beam member
- 260: side plate detection member
- 270: lower door plate
- 271: first portion
- 272: second portion

- 280: drive assembly
- 281: driving member
- 282: push-pull member
- 2821: convex ball
- 2822: reset elastomer
- 2823: fixing plate
- 283: mounting abutment member
- 291: cargo delivery detection member
- 292: cargo detection member
- 293: limit block
- 300: cargo loading platform
- 400: guide structure
- 500: inventory device
- 510: extending structure
- 511: limit groove
- 520: inventory structure
- 530: moving member
- 540: telescopic driving member
- 541: telescopic motor
- 542: synchronous belt structure
- 5421: driving wheel

- 5422: synchronous belt
- 5423: driven wheel
- 550: track member
- 551: first mounting plate
- 552: track plate
- 553: third mounting plate
- 554: first side plate
- 555: second side plate
- 560: first support wheel
- 570: second support wheel
- 581: first hinge seat
- 582: second hinge seat
- 583: limit member
- 584: second mounting plate
- 10: automatic picking system
- 11: storage lane
- 12: cargo
- 101: lane inlet
- 102: lane outlet
- 20: automatic replenishment system

### DETAILED DESCRIPTION

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, meanings of the preceding terms in the present application may be understood based on situations.

In the present application, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "above", "below" and "right" are based on orientations or position relations shown in the drawings. These orientations or position relations are intended only to facilitate and simplify the operation and not to indicate or imply that a device or element referred to must have such specific orientations or must be configured or operated in such specific orientations. Thus, these orientations or position relations are not to be construed as limiting the present application. Additionally, terms "first" and "second" are used for distinguishing between descriptions and have no special meanings.

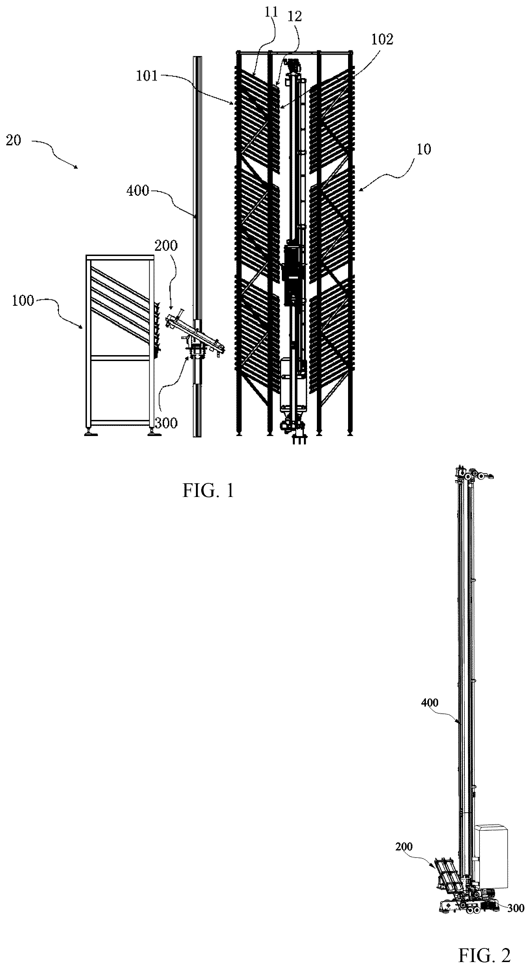

As shown in FIG. 1, the present application opens an automated warehouse. The automated warehouse includes an automatic picking system 10 and an automatic replenishment system 20. The automatic replenishment system 20 can perform replenishment operations for the automatic picking system 10 to ensure that there are sufficient cargos 12 packaged according to order information in the automatic picking system 10.

The automatic picking system 10 includes a storage shelf and a picking mechanism. The storage shelf is a three-dimensional shelf disposed in the automatic picking system 10 to store cargos 12. A storage lane 11 is disposed on the storage shelf and is disposed slantedly relative to the horizontal direction. The storage lane 11 includes a lane inlet 101 located at a high position of the storage lane 11 and a lane outlet 102 located at a low position of the storage lane 11. Cargos 12 are put into the storage lane 11 from the lane inlet 101 and can move along the storage lane 11 to the lane outlet 102. The cargos 12 wait at the lane outlet 102 until the cargos are picked up by the picking mechanism of the automatic picking system 10. The structure of the picking mechanism is a related art, which is not described in detail here.

To increase an amount of stored cargos, multiple storage lanes 11 are disposed side by side in the height direction of the storage shelf. The same or different cargos 12 can be stored in each storage lane 11. The picking mechanism can move in the vertical direction to pick up cargos 12 from different storage lanes 11, enabling the automatic picking system 10 to efficiently complete orders.

With continued reference to FIGS. 1 and 2, the automatic replenishment system 20 includes a buffer station 100 and a replenishment apparatus. The buffer station 100 is disposed next to the storage shelf and is a small storage mechanism that can temporarily store some cargos 12. The replenishment apparatus can move to the buffer station 100, and the replenishment apparatus and the buffer station 100 are docked. The replenishment apparatus collects cargos 12 from the buffer station 100, moves to the storage shelf and puts the cargos 12 into the storage lane 11 of the storage shelf from the lane inlet 101 of the storage shelf.

The height of the buffer station 100 is relatively low, and the replenishment worker can arrange cargos 12 in the buffer station 100 by standing on the ground. Not only is the operation simple, but the worker only needs to replenish the buffer station 100 in stages to meet the replenishment requirements of the automatic picking system 10. During the replenishment process, there is no need to be in contact with the replenishment apparatus that needs to be moved, which has high safety, high replenishment efficiency and good reliability.

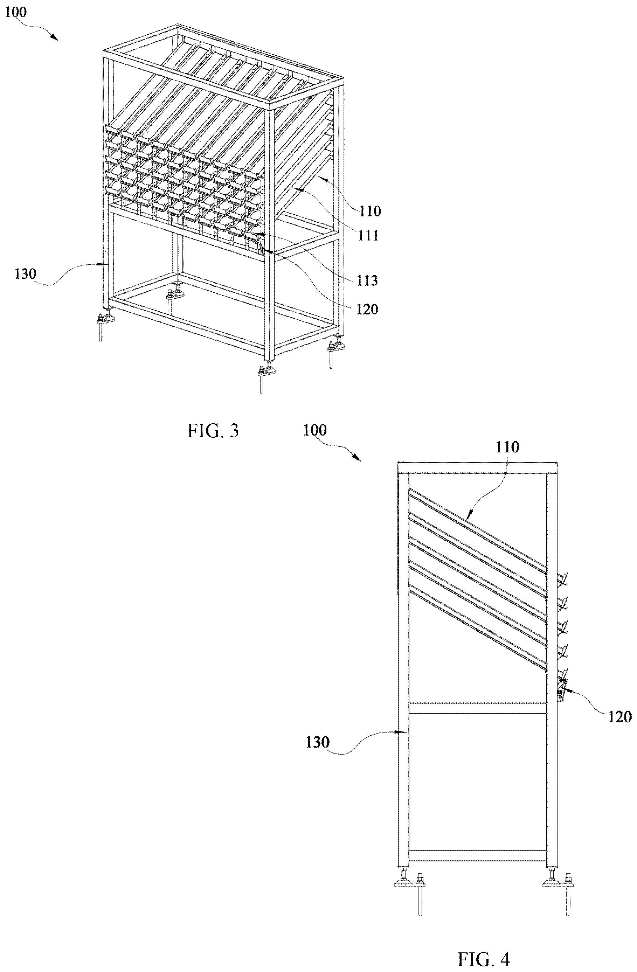

As shown in FIGS. 3 to 9, the buffer station 100 includes a buffer shelf 110 and a door assembly 120. A buffer lane 111 is disposed slantedly on the buffer shelf 110 and includes a replenishment port 112 located at a high position of the buffer lane 111 and a cargo collection port 113 located at a low position of the buffer lane 111. The door assembly 120 includes an upper door plate 121 rotatably connected to the cargo collection port 113. The upper door plate 121 has an open position where the cargo collection port 113 is opened and a closed position where the cargo collection port 113 is closed.

The worker places the cargos 12 into the buffer shelf 110 from the replenishment port 112 located at a high position. The cargos 12 move towards the cargo collection port 113 located at a low position along the buffer lane 111 disposed slantedly in the height direction and is finally blocked by the door assembly 120 at the closed position. In this manner, cargos 12 are delivered into the replenishment port 112 in cycles until the buffer lane 111 is full of cargos 12. When the replenishment apparatus moves to the cargo collection port 113, the door assembly 120 can be controlled to switch from the closed position to the open position where the cargo collection port 113 is opened. In this case, the replenishment apparatus can collect the cargos 12 from the cargo collection port 113 that is in the open state. During the process that the cargo 12 located at the lowest position is picked up by the replenishment apparatus, the cargos 12 located at relatively high positions in the buffer lane 111 slide down under gravity and pass through the opened cargo collection port 113 in sequence so that the cargos 12 in the buffer lane 111 can be picked up by the replenishment apparatus one by one. When the inventory of cargos 12 in the buffer station 100 is insufficient, the worker can continue to replenish the buffer station 100.

Since the inclined buffer lane 111 is disposed in the buffer station 100, as long as the cargo collection port 113 is opened, the cargos 12 can slide downwards along the inclined buffer lane 111 under gravity of the cargos and pass through the opened cargo collection port 113. Disposing in this manner makes the entire cargo collection process continuous and efficient. Not only is the efficiency of cargo collection improved, but the movement of cargos 12 also does not need manual participation, ensuring high safety.

Multiple buffer lanes 111 are disposed, and a door assembly 120 is disposed at a cargo collection port 113 of each buffer lane 111. Multiple buffer lanes 111 are arranged in rows and columns, and the same or different cargos 12 can be stored in each buffer lane 111.

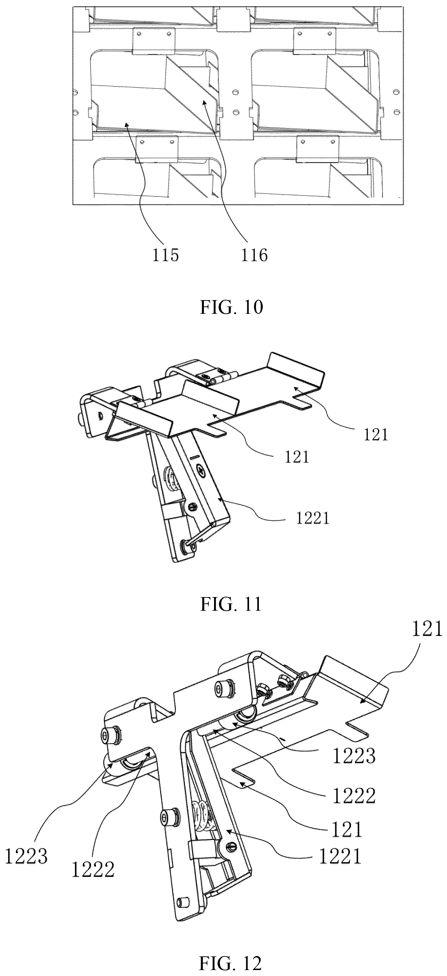

In some embodiment, as shown in FIG. 10, the buffer shelf 110 includes a buffer bottom plate 115 for forming a bottom surface of the buffer lane 111, where an included angle between a short side of the buffer bottom plate 115 and a horizontal line is an acute angle. Disposing in this manner makes the cargos 12 incline to one side in the width direction of the buffer bottom plate 115 during the sliding process from top to bottom on the buffer bottom plate 115, thereby enabling the cargos 12 to be arranged neatly when moving in the buffer lane 111 and facilitating subsequent accurate cargo pickup of the replenishment apparatus.

The buffer shelf 110 further includes a buffer side plate 116 located on a side of the buffer bottom plate 115. The buffer side plate 116 is disposed along the vertical direction, and the cargos 12 can attach to the buffer side plate 116 and slide downwards. Two buffer side plates 116 are disposed. In the width direction of the buffer bottom plate 115, the two buffer side plates 116 are disposed on two sides of the buffer bottom plate 115. The buffer bottom plate 115 and the two buffer side plates 116 enclose to form a U-shaped buffer lane 111 with an opening at the top.

With continued reference to FIGS. 3 to 5, the buffer shelf 110 further includes a support frame 130. The support frame 130 is configured to support the buffer bottom plate 115 and the buffer side plate 116. In an embodiment, the support frame 130 includes cross rods and vertical rods, and multiple cross rods and multiple vertical rods are spliced to form a cubic frame structure. In an embodiment, the support frame 130 further includes multiple lane plates cross-connected to form grids, and a group of buffer bottom plates 115 and a group of buffer side plates 116 are mounted in each grid. In an embodiment, the support frame 130 further includes ground nails. The ground nails can stably fix the support frame 130 on the ground to prevent the buffer station 100 from tipping over.

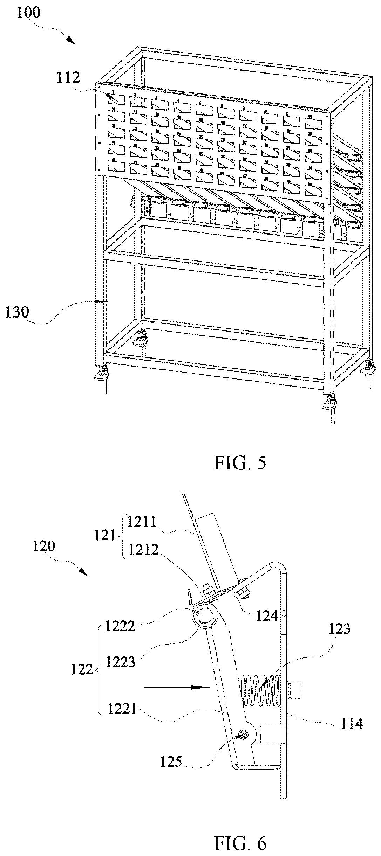

In some embodiments, with continued reference to FIG. 6, the upper door plate 121 has a generally L-shaped structure. The upper door plate 121 includes a blocking part 1211 and an abutment portion 1212 that are connected to each other at an angle. The blocking part 1211 is configured to block the cargo collection port 113, and the abutment portion 1212 is configured to withstand a support force so that the upper door plate 121 can be maintained at the closed position. When the support force disappears, the upper door plate 121 loses support and directly switches from the closed position to the open position. The external force that causes the upper door plate 121 to lose support here may come from the replenishment apparatus or from other power members.

In an embodiment, the upper door plate 121 is rotatably connected to the cargo collection port 113, and the door assembly 120 further includes a hinge 124. One end of the hinge 124 is fixedly connected to the abutment portion 1212, and the other end of the hinge 124 is fixedly connected to the buffer shelf 110. The buffer shelf 110 includes a front cross beam 114 disposed at the cargo collection port 113, and the other end of the hinge 124 is fixed to the front cross beam 114. In other embodiments, the upper door plate 121 may also be disposed at the cargo collection port 113 in a moving manner, and the switch between the closed position and the open position is achieved through movement.

With continued reference to FIGS. 6 to 9, the door assembly 120 further includes a flipping member 122. The flipping member is configured to support the upper door plate 121 and withstand external forces that change the state of supporting the upper door plate 121 to achieve the swing open of the upper door plate 121. The flipping member 122 is rotatably connected to the buffer shelf 110 and abuts against the abutment portion 1212.

In some embodiments, the flipping member 122 includes a push plate 1221, and the push plate 1221 is rotatably connected to the buffer shelf 110. A rotating shaft seat is disposed on the front cross beam 114, and the push plate 1221 is rotatably connected to the rotating shaft seat via a rotating shaft 125. Applying a force to the push plate 1221 can cause the push plate 1221 to rotate around the rotating shaft 125, thereby causing the upper door plate 121 to switch from the closed position to the open position. The direction of the applied force is represented by the arrow in FIG. 6.

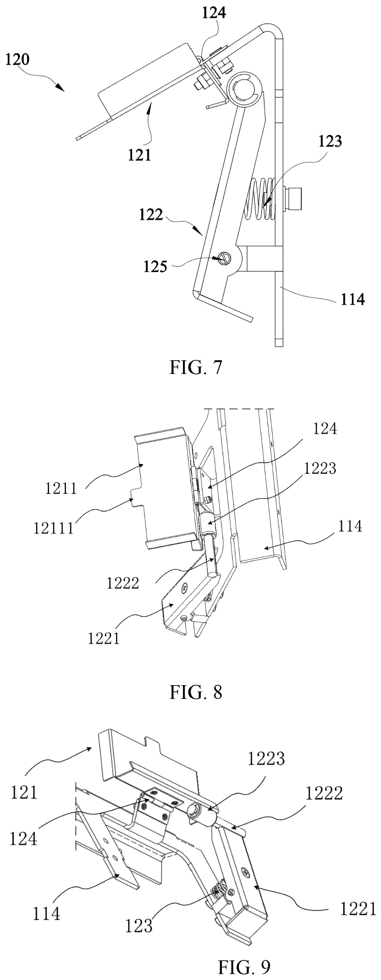

With continued reference to FIG. 6, the rotating shaft 125 is disposed at a slightly lower position in the middle of the push plate 1221. The top of the push plate 1221 can support the abutment portion 1212 of the upper door plate 121. When the force is applied in the direction represented by the arrow in FIG. 6, the top of the push plate 1221 moves in a direction close to the front cross beam 114, causing the abutment portion 1212 to lose support. Under gravity, the upper door plate 121 rotates counterclockwise and switches from the state shown in FIG. 6 to the state shown in FIG. 7, completing the switch from the closed position to the open position.

After the replenishment apparatus completes the cargo pickup from the cargo collection port 113, to enable the upper door plate 121 to automatically reset to the closed position so that the upper door plate 121 is maintained at the closed position without external force, as shown in FIGS. 6 to 9, the door assembly 120 further includes a reset elastic member 123. The reset elastic member 123 is disposed between the flipping member 122 and the buffer shelf 110 and has a tendency to reset the upper door plate 121 to the closed position. During the process of applying force to the push plate 1221 according to the arrow in FIG. 6, the reset elastic member 123 is compressed and accumulates elastic potential energy. After the force applied to the push plate 1221 is cancelled, under the action of the reset elastic member 123, the upper door plate 121 is reset from the state shown in FIG. 7 to the state shown in FIG. 6, completing the switch from the open position to the closed position.

To reduce the friction generated on the upper door plate 121 during the process of the movement of the push plate 1221 and reduce the wear on the upper door plate 121, the flipping member 122 further includes a connecting rod 1222 and a rotating wheel 1223. The connecting rod 1222 is connected to the push plate 1221, and the rotating wheel 1223 is rotatably connected to the connecting rod 1222 and rolls on the abutment portion 1212.

In an embodiment, the reset elastic member 123 includes a coil spring. One end of the coil spring is fixed to the push plate 1221, and the other end of the coil spring is fixed to the front cross beam 114. In addition to the coil spring, the reset elastic member 123 may also be another elastomer, for example, a spring plate.

Since multiple buffer lanes 110 are disposed on the buffer shelf 110 and an upper door plate 121 is disposed at a cargo collection port 113 of each buffer lane 111, during one replenishment process of the replenishment apparatus, there is a need to open multiple cargo collection ports 113 to collect cargos. Therefore, multiple upper door plates 121 or multiple flipping members 122 can be connected via connectors to meet the requirements for synchronous opening and closing of multiple cargo collection ports 113.

In some embodiments, there is a need to collect cargos from two adjacent cargo collection ports 113. To improve the efficiency of collecting cargos, as shown in FIGS. 11 and 12, one end of the flipping member 122 can be in contact with abutment portions 1212 of both two adjacent upper door plates 121. In this manner, during one flipping process of the flipping member 122, two cargo collection ports 113 can be opened simultaneously.

In an embodiment, two rotating wheels 1223 are disposed and roll on abutment portions 1212 of two adjacent upper door plates 121, respectively. The number of connecting rods 1222 may be set to one or two according to a requirement. If the number of connecting rods 1222 is set to one, a length of the connecting rod 1222 is relatively long, two ends of the connecting rod 1222 protrude from the push plate 1221, and the two rotating wheels 1223 are rotatably connected to the two ends of the connecting rod 1222, respectively. If the number of connecting rods 1222 is set to two, a length of each connecting rod 1222 is relatively short, the two connecting rods 1222 protrude from the push plate 1221, and the two rotating wheels 1223 are rotatably connected to the two connecting rods 1222 in one-to-one correspondence.

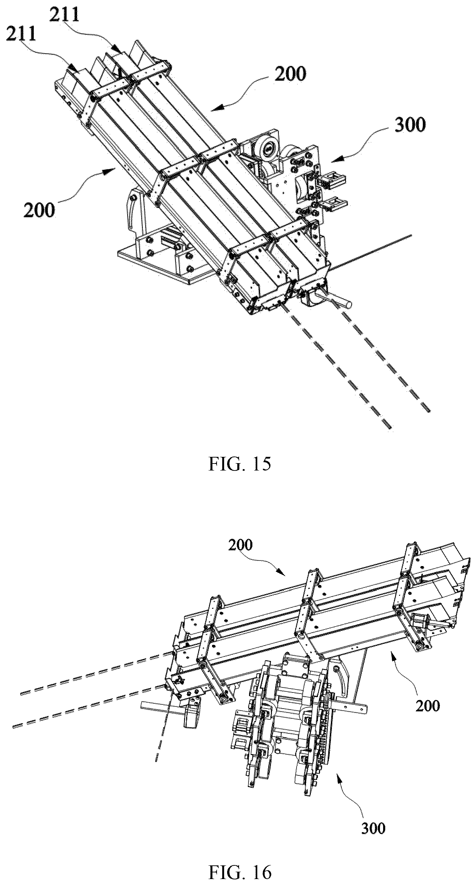

As shown in FIGS. 2 and 13 to 16, the replenishment apparatus includes a traveling mechanism, a cargo loading platform 300 and a liftable and lowerable replenishment device 200. The replenishment apparatus can move between the buffer station 100 and the storage shelf via the traveling mechanism. The structure of the traveling mechanism is not described in detail here. The traveling mechanism may be a combination of a traveling body, a power component and a track component. The power component drives the traveling body to move on the track component so that the cargo loading platform 300 and the replenishment device 200 that are located on the traveling body can move synchronously. In addition, the traveling mechanism may also be another structure that can output a linear motion, for example, a moving platform composed of a motor and a belt transmission structure.

With continued reference to FIG. 2, the traveling mechanism includes a vertically disposed guide structure 400. The guide structure 400 is a vertically disposed guide rail. The cargo loading platform 300 disposed on the guide structure is liftable and lowerable, and the replenishment device 200 is disposed on the cargo loading platform 300 and is synchronously lifted and lowered with the cargo loading platform 300. The lifting and lowering drive structure for driving the cargo loading platform 300 to be lifted and lowered along the guide rail is not described in detail here and may be any mechanism that can output a linear motion, for example, a linear motor, a combination of a motor, a gear and a rack, or a cylinder.

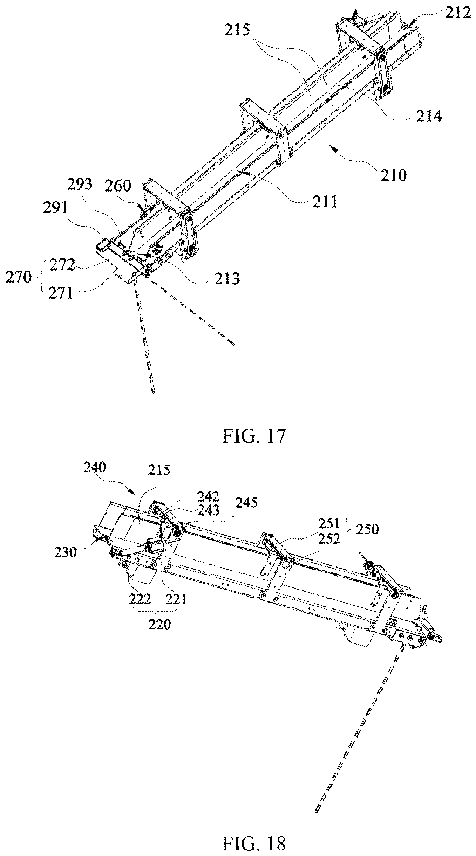

The replenishment device 200 is the main structure that enables the replenishment apparatus to dock with the buffer station 100 and the buffer shelf. The replenishment device 200 has both the functions of cargo collection and cargo replenishment. As shown in FIGS. 17 to 26, the replenishment device 200 includes a replenishment device body 210 on which a replenishment lane 211 is disposed slantedly. The replenishment lane 211 includes a cargo receiving port 212 located at a high position of the replenishment lane 211 and a cargo discharge outlet 213 located at a low position of the replenishment lane 211. The cargo receiving port 212 is configured to receive cargos 12, and the cargo discharge port 213 is configured to release cargos 12. Driven by the cargo loading platform 300, the replenishment device 200 can move to the replenishment position where the cargo receiving port 212 is directly opposite to the cargo collection port 113 of the buffer station 100.

The replenishment device body 210 includes a lane bottom plate 214 and two lane side plates 215 for forming the replenishment lane 211. In the width direction of the lane bottom plate 214, the two lane side plates 215 are disposed on two sides of the lane bottom plate 214. The lane bottom plate 214 and the two lane side plates 215 enclose to form a U-shaped replenishment lane 211 with an opening at the top that can stably protect the cargos 12 and prevent the cargos 12 from flying out of the replenishment lane 211.

The inclination degree of the replenishment lane 211 may be the same or different from the inclination degree of the buffer lane 111 of the buffer station 100. The inclination degree of the replenishment lane 211 is flexibly disposed according to requirements, as long as it ensures that cargos 12 can smoothly enter the replenishment lane 211 from the buffer lane 111.

To synchronously open the cargo collection port 113 to improve the efficiency of collecting cargos during the process that the replenishment device 200 and the buffer station 100 are docked, as shown in FIG. 18, the replenishment device 200 further includes a door pushing assembly 220. The door pushing assembly 220 can drive the upper door plate 121 to switch from the closed position to the open position so that the cargo receiving port 212 and the cargo collection port 113 are docked and connected. That is, the door pushing assembly 220 is configured to apply the external force represented by the arrow in FIG. 6 to the flipping member 12, causing the flipping member 122 to rotate. The rotation of the flipping member 122 releases the support for the upper door plate 121, causing the upper door plate 121 to fold counterclockwise.

In some embodiments, the door pushing assembly 220 includes a door pushing driving member 221 and a push member 222. The door pushing driving member 221 is disposed on a side of the replenishment device body 210 facing the buffer station 100, and the door pushing driving member 221 is disposed on the replenishment device body 210. The door pushing driving member 221 is drivingly connected to the push member 222 and is configured to drive the push member 222 to move linearly. The push member 222 is configured to apply a force to the flipping member 122. The door pushing driving member 221 is a linear motor. The push member 222 is a push rod, and a cylindrical pushing block to apply a force to the push plate 1221 is disposed at an end of the push rod.

At the material collection stage of the replenishment device 200, the door push driving member 221 drives the push member 222 to move in the direction close to the flipping member 122 so that the push member 222 is in contact with the push plate 1221 of the above flipping member 122. The push plate 1221 rotates around the rotating shaft 125 of the push plate 1221 under the push of the push member 222 to open the upper door plate 121, and the cargos 12 in the buffer lane 111 pass through the cargo collection port 113 and the cargo receiving port 212 during the process of gravity and enter the replenishment lane 211. The subsequent cargos 12 fill in the positions in sequence. Then, after the replenishment of cargos 12 in the replenishment lane 211 is completed, applying a force to the push plate 1221 is stopped, and the upper door plate 121 is reset to the closed position under the action of the reset elastic member 123 and waits for the next opening.

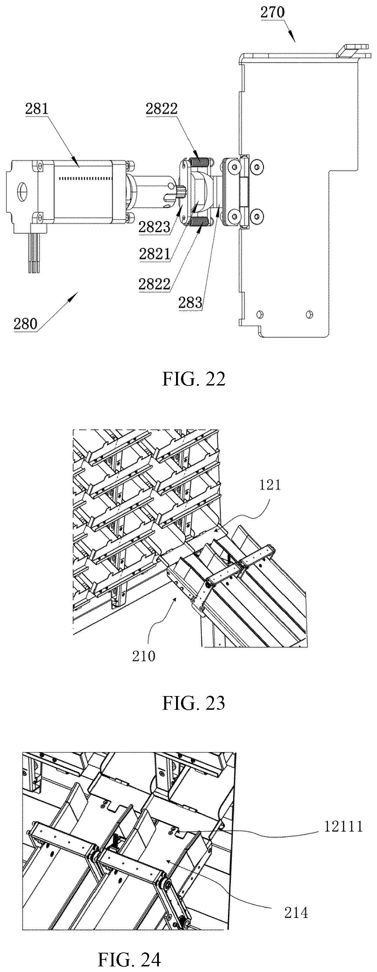

To improve the smoothness of cargos 12 entering the replenishment lane 211 from the buffer lane 111, as shown in FIG. 23, the upper door plate 121 at the open position overlaps the lane bottom plate 214 of the replenishment lane 211.

With continued reference to FIG. 18, the replenishment device 200 further includes an in-place detection member 230. The in-place detection member 230 is disposed at the end of the lane bottom plate 214 and is configured to detect the upper door plate 121. The in-place detection member 230 is an in-place sensor and may be a proximity switch. When the upper door plate 121 overlaps the lane bottom plate 214 of the replenishment lane 211, the in-place detection member 230 can send a confirmation signal that the upper door plate 121 is opened in place.

As shown in FIG. 24, the upper door plate 121 includes a protruding portion 12111. The protruding portion 12111 is used in combination with the in-place detection member 230. When the upper door plate 121 is at the open position, the protruding portion 12111 just covers the in-place detection member 230. A recess is disposed at the end of the lane bottom plate 214, and the in-place detection member 230 is disposed in the recess. After the protruding portion 12111 overlaps in the recess, the protruding portion 12111 does not protrude from the lane bottom plate 214 to avoid affecting the smoothness of the movement of the cargos 12.

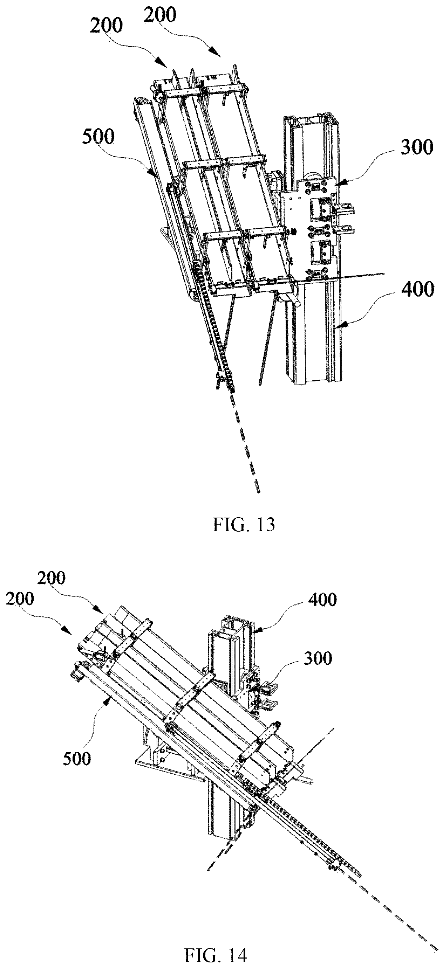

Due to the wide variety and varying widths of cargos 12, to adjust the width of the replenishment lane 211 so that the replenishment lane 211 can accommodate different widths of cargos 12, with continued reference to FIGS. 13, 14, 17 and 18, at least one of the two lane side plates 215 included in the replenishment device body 210 can be moved to adjust the width of the replenishment lane 211.

That is, in some embodiments, one of the two lane side plates 215 is fixedly disposed, and the other one of the two lane side plates 215 is movably disposed. The movably disposed lane side plate 215 can be close to or far away from the fixedly disposed lane side plate 215 to change the width of the replenishment lane 211 formed by the partial enclosing of the two lane side plates 215 and the lane bottom plate 214 located between the two lane side plates 215. In some parallel embodiments, both the two lane side plates 215 can move, that is, the two lane side plates 215 can be close to or far away from each other, thereby changing the width of the replenishment lane 211 formed by the partial enclosing of the two lane side plates 215 and the lane bottom plate 214 located between the two lane side plates 215.

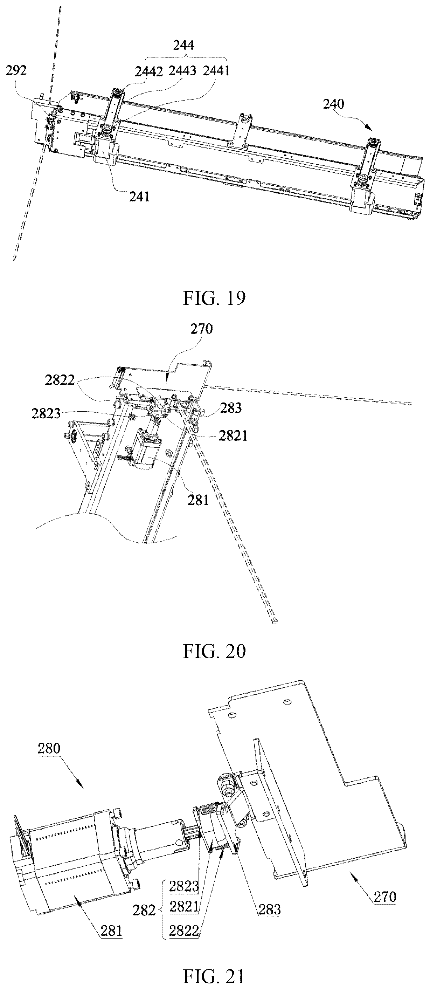

To achieve the movement of the lane side plate 215, with continued reference to FIGS. 18 and 19, the replenishment device 200 further includes a variable pitch driving member 240, and the variable pitch driving member 240 is configured to drive the lane side plate 215 to move. The variable pitch driving member 240 includes a variable pitch motor 241, a lead screw 242 and a nut block 243. A motor shaft of the variable pitch motor 241 is drivingly connected to an end of the lead screw 242. The nut block 243 is threadedly connected to the lead screw 242 to form a lead screw nut pair with the lead screw 242. The nut block 243 is connected to the movable lane side plate 215. The nut block 243 is connected to the movable lane side plate 215 via a connection push plate 245.

When the variable pitch motor 241 is in operation, the lead screw 242 can rotate around the central axis of the variable pitch motor 241, and the nut block 243 can move along the axial direction of the lead screw 242, thereby driving the lane side plate 215 to move. When only one lane side plate 215 needs to be driven to move, the lead screw 242 is a screw rotating in a single direction, and the number of nut blocks 243 is one. When two lane side plates 215 need to be driven to move, a double-ended screw with two different threaded sections rotating in different directions may be selected as the lead screw 242, and the number of nut blocks 243 is two. The two nut blocks 243 are connected to the threaded sections rotating in different directions via screw threads, respectively, and the two nut blocks 243 are connected to the two lane side plates 215 in one-to-one correspondence.

The variable pitch driving member 240 further includes a conveyor belt mechanism 244. The variable pitch motor 241 is drivingly connected to the lead screw 242 via the conveyor belt mechanism 244. The conveyor belt mechanism 244 includes a drive pulley 2441, a driven pulley 2442 and a conveyor belt 2443. The motor shaft of the variable pitch motor 241 is connected to the drive pulley 2441, and the drive pulley 2441 is spaced apart from the driven pulley 2442. The driven pulley 2442 is sleeved on the lead screw 242, and the conveyor belt 2443 is sleeved on the drive pulley 2441 and the driven pulley 2442.

With continued reference to FIG. 18, the replenishment device 200 further includes a variable pitch mounting bracket 250, and a portion of the structure of the variable pitch driving member 240 is mounted on the variable pitch mounting bracket 250. The variable pitch mounting bracket 250 is an inverted U-shaped structure and includes a cross beam member 251 and two side beam members 252, where the two side beam members 252 are connected to two ends of the cross beam member 251, respectively. The cross beam member 251 is located above the two lane side plates 215 and spans the lane bottom plate 214. The bottoms of the two side beam members 252 are connected to two sides of the lane bottom plate 214 in the width direction, respectively.

In an embodiment, the variable pitch motor 241 is fixed below the lane bottom plate 214, the conveyor belt mechanism 244 is mounted on the fixed lane side plate 215, and the lead screw 242 is located below the cross beam member 251 and rotatably connected to the two side beam members 252. If both the two lane side plates 215 are movable, the structure or position of the variable pitch mounting bracket 250 can also be adjusted so that the mounting of the variable pitch driving member 240 does not affect the movement of the lane side plate 215 and the movement of the cargos 12 in the replenishment lane 211.

In addition to the combination of the motor, the lead screw and the nut, according to requirements, the variable pitch driving member 240 may also be disposed as another mechanism that can output a linear motion, for example, a combination of a motor, a gear and a rack, a linear motor, or a cylinder.

The width of the replenishment lane 211 is set to be adjustable so that the replenishment apparatus can not only adapt to cargos 12 with multiple widths but can also align the cargos 12 entering the replenishment lane 211 by moving the lane side plate 215, thereby improving the orderliness of the movement of the cargos 12 and reducing the accuracy of subsequent replenishment of the storage lane 11. After the cargo collection port 113 of the buffer station 100 is opened, the cargos 12 in the buffer lane 111 quickly enter the replenishment lane 211. During this process, the cargos 12 may not be neat in the replenishment lane 211. The movable lane side plate 215 is moved so that the lane side plate 215 clamps the cargos 12 once to achieve the effect of aligning the cargos 12. After the cargos 12 are aligned, the movable lane side plate 215 is moved in a small distance in reverse so that the width of the replenishment lane 211 is sufficient and does not affect the entry of the subsequent cargos 12.

With continued reference to FIG. 17, the replenishment device 200 further includes a side plate detection member 260. The side plate detection member 260 is disposed on the replenishment device body 210 and is configured to detect the lane side plate 215 reset to an initial position. The side plate detection member 260 may be a proximity switch or a photoelectric sensor. The movable lane side plate 215 has a zero position, that is, the initial position of the lane side plate 215. The side plate detection member 260 belongs to a zero position detection mechanism that can detect whether the lane side plate 215 is located at the zero position.

To achieve the docking between the replenishment device 200 and the storage shelf, with continued reference to FIG. 17, the replenishment device 200 further includes a lower door plate 270. The lower door plate 270 is movably disposed at the cargo discharge outlet 213 and has a door open position where the cargo discharge outlet 213 is opened and a door closed position where the cargo discharge outlet 213 is closed. When the lower door plate 270 is at the door closed position, the cargos 12 are limited by the lower door plate 270 in the replenishment lane 211. When the lower door plate 270 is at the door open position, the replenishment lane 211 can be connected to the storage lane 11 of the storage shelf, and the cargos 12 located in the replenishment lane 211 can be moved to the storage lane 11.

Since storage lanes 11 of the storage shelf have inconsistent widths, the storage lanes 11 may have multiple widths, for example, two, three or more. For ease of description, the storage lanes 11 are divided into a narrow lane and a wide lane. Here, the narrow lane refers to the narrowest storage lane 11 among all the storage lanes 11, and the wide lane refers to the storage lane 11 with a width greater than the width of the narrow lane.

To dock with storage lanes 11 with different widths, in the width direction of the replenishment lane 211, the lower door plate 270 includes a first portion 271 and a second portion 272 that are interconnected. In the length direction of the replenishment lane 211, an end of the first portion 271 facing away from the replenishment device body 210 protrudes from an end of the second portion 272 facing away from the replenishment device body 210. That is, the lower door plate 270 is divided into two sections in the width direction of the lower door plate 270, and since the two sections have different lengths, a notch structure and a flange structure are formed. The flange structure is the portion of the first portion 271 protruding from the second portion 272, and the width of the flange structure (the width of the first portion 271) is set to be less than or equal to the width of the storage lane 11 with the smallest width (the width of the narrow lane). Disposing in this manner makes the flange structure extend into any one of the storage lanes 11 to complete docking, that is, both the narrow lane and the wide lane can ensure normal replenishment.

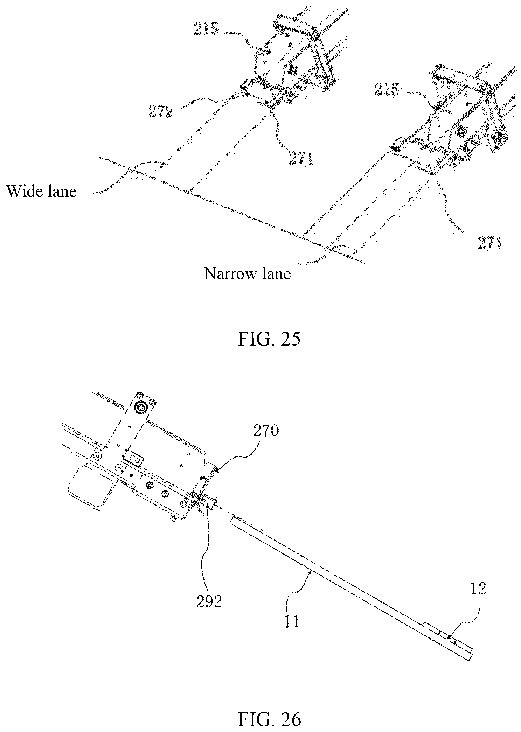

As shown in FIG. 25, before the replenishment device 200 and the storage lane 11 of the storage shelf are docked, the position of the movable lane side plate 215 needs to be adjusted so that the replenishment lane 211 is directly opposite to the first portion 271 (generally, this step is synchronously completed when the replenishment device 200 collects cargos from the buffer station 100, for example, this step is synchronously completed when the cargos 12 in the replenishment lane 211 are aligned) and the cargos 12 are directly opposite to the first portion 271. If the replenishment device 200 and a narrow lane are docked, the flange structure of the first portion 271 extends into the narrow lane to dock with the narrow lane, and cargos 12 with relatively small widths directly enter the narrow lane via the first portion 271. If the replenishment device 200 and the wide lane of the storage lanes 11 need to be docked, the first portion 271 and the wide lane can also be docked. When cargos 12 with relatively large widths pass through the lower door plate 270, some cargos 12 pass through the first portion 271, and remaining cargos 12 pass through the second portion 272. Since the notch structure is formed on the front side of the second portion 272, the cargos 12 need to cross the notch structure and enter the wide lane. However, since the flange structure overlaps in the wide lane, the width of the notch formed at the notch structure is generally small, and the temporary lack of support does not affect the normal sliding of the cargos 12.

Cargo receiving ends of the storage lanes 11 are not necessarily aligned horizontally due to reasons such as material and manual installation, causing that the lower door plate 270 of the replenishment device 200 may not be in an ideal docking state which has very small spacing when docked with the storage lane 11. Therefore, the front end of the lower door plate 270 is designed as a structure with the notch structure and the flange structure to dock with storage lanes 11 with different widths. Designing the flange structure of the lower door plate 270 according to the minimum lane width can ensure stable replenishment when the lower door plate 270 is docked with the narrow lane and can also ensure normal docking when the lower door plate 270 faces the wide lane. The temporary lack of support at the notch structure does not affect the normal sliding of the cargos 12. In the case where only a flange structure with one width is disposed instead of using this design, if the width of the flange structure is designed according to the width of the narrow lane, when the lower door plate 270 is docked with the wide lane, the cargos 12 may fall off due to an excessively large gap; if the width of the flange structure is designed according to the width of the wide lane, when the lower door plate 270 is docked with the narrow lane, the lower door plate 270 cannot be fully opened due to the obstruction of the lane side plate 215, affecting the normal movement of the cargos 12.

In some embodiments, an ejection limit mechanism is disposed on the lane bottom plate 214. The ejection limit mechanism includes a movable limit block 293. An ejection port is disposed at the end of the lane bottom plate 214 facing the cargo discharge outlet 213, and the limit block 293 is movably disposed in the ejection port. The limit block 293 has a limit position protruding outside the lane bottom plate 214 and an avoidance position hidden in the lane bottom plate 214. The limit block 293 at the limit position can restrict the cargos 12 to move along the inclined replenishment lane 211, and the limit block 293 at the avoidance position can lift the restriction on the cargos 12. During the replenishment process, the limit block 293 of the ejection limit mechanism moves circularly, thereby replenishing the cargos 12 into the storage lane 11 one by one.

The power for driving the limit block 293 to switch between the limit position and the avoidance position may come from a power member that can output a linear motion, for example, a micro cylinder, or a linkage structure may be disposed between the lower door plate 270 and the limit block 293. The linkage structure includes a connecting rod structure. When the lower door plate 270 is opened, the lower door plate 270 drives the limit block 293 to move from the limit position to the avoidance position via the linkage structure. When the lower door plate 270 is closed, the lower door plate 270 drives the limit block 293 to move from the avoidance position to the limit position via the linkage structure.

With continued reference to FIGS. 20 to 22, to achieve the driving of the lower door plate 270, the replenishment device 200 further includes a drive assembly 280. The drive assembly 280 includes a driving member 281, a push-pull member 282 and a mounting abutment member 283. The driving member 281 has an extendable and retractable telescopic end, and the telescopic end of the driving member 281 is connected to the push-pull member 282 and can drive the push-pull member 282 to move linearly. The mounting abutment member 283 is disposed on the lower door plate 270. When the telescopic end of the driving member 281 extends, the push-pull member 282 causes the lower door plate 270 to switch from the door open position to the door closed position by pushing the mounting abutment member 283. When the telescopic end of the driving member 281 retracts, the push-pull member 282 causes the lower door plate 270 to switch from the door closed position to the door open position by pulling the mounting abutment member 283.

One end of the lower door plate 270 is connected to an end of the lane bottom plate 214 facing cargo discharge outlet 213 via a hinge member. The lower door plate 270 switches between the door open position and the door closed position through rotation. The driving member 281 drives the push-pull member 282 to move linearly to push and pull the mounting abutment member 283 so that the lower door plate 270 can switch between the door open position and the door closed position. This linear driving manner makes the structure of the drive assembly 280 compact and makes the structure of the drive assembly 280 occupy less space.

The driving member 281 may be a mechanism that can directly output a linear motion, for example, a cylinder or a linear motor. The driving member 281 may also be a combination of a power component that can output a rotational motion and a transmission component that can convert the rotational motion into a linear motion, for example, a combination of a motor, a gear and a rack or a combination of a motor and a lead screw nut.

With continued reference to FIGS. 21 and 22, the push-pull member 282 includes a convex ball 2821. The convex ball 2821 is fixed to the telescopic end of the driving member 281 and abuts against the mounting abutment member 283. When the telescopic end of the driving member 281 extends, the convex ball 2821 moves in a straight line. The convex ball 2821 is only configured to push the mounting abutment member 283 to provide power for the lower door plate 270 to flip upward from the door open position and switch to the door closed position. When the telescopic end of the driving member 281 retracts, the convex ball 2821 retracts accordingly and separates from the mounting abutment member 283. Therefore, during the retraction process of the convex ball 2821, no tension is provided to the mounting abutment member 283, and the lower door plate 270 cannot be driven to rotate back to the door open position.

To enable the lower door plate 270 to rotate back to the door open position, with continued reference to FIGS. 21 and 22, the push-pull member 282 further includes a reset elastomer 2822 and a fixing plate 2823. The fixing plate 2823 is fixed to the telescopic end of the driving member 281, and the reset elastomer 2822 is connected between the mounting abutment member 283 and the fixing plate 2823 and pushes or pulls back the mounting abutment member 283.

The reset elastomer 2822 plays a role in pushing the lower door plate 270 to the door closed position or pulling the lower door plate 270 back to the door open position. Moreover, when the lower door plate 270 is at the door open position shown in FIG. 21, the reset elastomer 2822 has preload. During the process that the lower door plate 270 switches from the door open position shown in FIG. 21 to the door closed position, the preload first decreases and then increases. The reset elastomer 2822 enables relatively gentle driving of the lower door plate 270 to open or close the door. During the process of driving the lower door plate 270 to flip upward and downward to open the door, no relatively serious mechanical damage to the hinge member that achieves the rotatable connection between the lower door plate 270 and the lane bottom plate 214, which is conducive to improving the service life of the hinge member and reducing the cost. The way in which the drive assembly 280 drives the lower door plate 70 has relatively good flexibility, high accuracy and low possibility of docking failure.

The reset elastomer 2822 is a tension spring. A first tension spring hole is disposed on the fixing plate 2823, and a second tension spring hole is disposed on the mounting abutment member 283. Two ends of the tension spring are hooked on the first tension spring hole and the second tension spring hole. When the door of the lower door plate 270 is closed, the reset elastomer 2822 can drive the lower door plate 270 to flip downward and open the door by pulling the mounting abutment member 283, increasing the speed of the opening and the closing and improving the accuracy of the door opening.

To avoid excessive opening of the lower door plate 270, a limit structure is further disposed at the lower end of the lane bottom plate 214. When the lower door plate 270 flips downward to the state shown in FIG. 20, the limit structure can abut against the lower door plate 270, thereby preventing the lower door plate 270 from continuing to flip downward. The limit structure may be a block structure or columnar structure with a limit effect, and the structure of the limit structure is not limited.

With continued reference to FIGS. 19 and 26, the replenishment device 200 further includes a cargo detection member 292. The cargo detection member 292 is disposed on the lower door plate 270. The lower door plate 270, which is at the closed position, causes the cargo detection member 292 to face the storage lane 11, and the cargo detection member 292 is configured to detect the amount of stored cargos 12 in the storage lane 11 to determine whether there is a replenishment requirement for the storage lane 11.

The cargo detection member 292 is a ranging sensor mounted on the mounting abutment member 283. The ranging sensor can emit detection light parallel to the direction of the storage lane 11 when the lower door plate 270 is at the closed position, and the detection light penetrates deep into the storage lane 11.

After the replenishment device 200 reaches the storage lane 11 on the storage shelf where replenishment is needed, the ranging sensor is needed to detect the condition of the cargos 12 in the storage lane 11. The detection manner is to measure whether there are cargos 12 within a certain distance range via the ranging sensor. If there are no cargos 12, it can be verified that the storage lane 11 needs replenishment. In this case, the lower door plate 270 is directly controlled to open to form a docking slide, and then replenishment begins directly. This not only ensures the accuracy of replenishment and reduces the probability of wrong replenishment, but also has a clever design that does not need unnecessary movement and positioning. If the detected distance is incorrect, for example, the detected distance is very short, it indicates that the storage lane 11 is filled with cargos 12, and the information that the storage lane 11 needs replenishment is incorrect.

With continued reference to FIG. 17, the replenishment device 200 further includes a cargo delivery detection member 291 disposed on the lower door plate 270. The detection light emitted by the cargo delivery detection member 291 is perpendicular to the moving direction of the cargos 12, and the cargo delivery detection member 291 is configured to detect whether there is any cargo 12 stuck at the lower door plate 270.

The cargo delivery detection member 291 is disposed on the inner side of the lower door plate 270. When the lower door plate 270 is at the door closed position, the cargo delivery detection member 291 is hidden on the inner side of the lower door plate 270. When the lower door plate 270 is at the door opened position, the cargo delivery detection member 291 is exposed to the outside. The cargo delivery detection member 291 is a photoelectric sensor. In addition, the cargo delivery detection member 291 can also be used for counting the cargos 12 passing through the lower door plate 270, thereby facilitating that the replenishment device 200 stops replenishment after the expected value of replenishment for one storage lane 11 is reached. Afterwards, the replenishment device 200 can move to the next replenishment position to replenish another storage lane 11, or the replenishment device 200 returns to the buffer station 100 to collect cargos 12.

Compared to the laser inventory method in related technologies that uses laser probes to emit lasers at the entrance of the cargo lane to inventory the goods stored in the cargo lane, the inventory structure 520 of the inventory device 500 provided in this application can be extended into the storage cargo lane 11 through the cargo lane entrance 101 and detected at a relatively closer distance, which can reduce the impact of deformation of the storage cargo lane 11 caused by various reasons on the detection. That is, in the case of close range detection, it can effectively ensure the correctness of the detection of the target goods 12, thereby improving the accuracy of inventory and reducing the error rate. Compared with the manual inventory method, the inventory structure 520 of the inventory device 500 provided in this application can more efficiently and accurately detect goods 12 and obtain inventory data by inserting them into the storage aisle 11 through the cargo channel inlet 101

Before the replenishment device 200 replenishes one storage lane 11 of the storage shelf, the inventory check needs to be performed on the inventory of cargos 12 in the storage lane 11 to determine the replenishment number. To achieve the inventory check performed on the cargos 12 in the storage aisle 11, as shown in FIGS. 13, 14 and 27 to 32, the replenishment apparatus further includes an inventory device 500. The inventory device 500 includes an extending structure 510 and an inventory structure 520. The extending structure 510 is movably disposed relative to the replenishment device 200, and the extending structure 510 is movably disposed on the replenishment device body 210 or may be disposed on the cargo loading platform 300. The inventory structure 520 is located at the end of the extension structure 510. With the movement of the extending structure 510, the inventory structure 520 can enter the storage lane 11 via the lane inlet 101 to perform inventory check on the cargos 12 located in the storage lane 11.

Compared with the laser inventory check manner in the related art that a laser probe emits lasers at the lane inlet to perform inventory check on the cargos in the storage lane, the inventory structure 520 of the inventory device 500 provided in the present application can extend into the storage lane 11 via the lane inlet 101 and detect within a relatively short distance, which can reduce the effect of deformation of the storage lane 11 caused by multiple reasons on the detection. That is, in the case of short distance detection, the correctness of the detection of the target cargos 12 can be effectively ensured, thereby improving the accuracy of inventory check and reducing the error rate. Compared with the manual inventory check manner, the inventory structure 520 of the inventory device 500 provided in the present application can more efficiently and accurately detect cargos 12 and obtain inventory data by inserting them into the storage lane 11 through the cargo channel inlet 101.

To obtain the inventory number n of cargos 12, the following parameters are known: 1. the length L of the storage lane 11; 2. the extension stroke L1 of the extended structure 510 when the inventory structure 520 detects cargos 12; 3. the length L2 of the cargos 12 in the storage lane11; 4. the distance L3 between the inventory structure 520 and the cargos 12 when the inventory structure 520 can detect cargos 12; 5. the distance L4 between the inventory structure 520 and the lane inlet 101 when the extending structure 510 is not extending or retractable, where n = (L-L1+L4-L3)/L2, and the quantity of goods that need to be supplemented in this cargo lane is 12, N = L/L2-n.

In an embodiment, the extending structure 510 is an elongated rod.

In an embodiment, the inventory structure 520 is one of a laser ranging sensor, an infrared ranging sensor, a microswitch and a pressure sensor. It is to be noted that the inventory structure 520 may also be disposed as another sensor according to requirements, and the sensor can be used as long as signals can be detected within a short distance.

To drive the extending structure 510 to move, the inventory device 500 further includes a telescopic driving member 540. The telescopic driving member 540 is drivingly connected to the extending structure 510 and is configured to drive the extending structure 510 to move in a direction that is basically parallel to the extension direction of the storage lane 11.

In some embodiments, the telescopic driving member 540 includes a telescopic motor 541 and a synchronous belt structure 542. The synchronous belt structure 542 includes a driving wheel 5421, a driven wheel 5423 and a synchronous belt 5422. The driving wheel 5421 and the driven wheel 5423 are spaced apart and rotatable, and the synchronous belt 5422 is sleeved on the driving wheel 5421 and the driven wheel 5423. A motor shaft of the telescopic motor 541 is drivingly connected to the driving wheel 5421, and the extending structure 510 is connected to the synchronous belt 5422 of the synchronous belt structure 542. Of course, in other embodiments, the telescopic driving member 540 may also be another structure that can output a linear motion, for example, a cylinder, a linear motor or a combination of a motor, a gear and a rack.

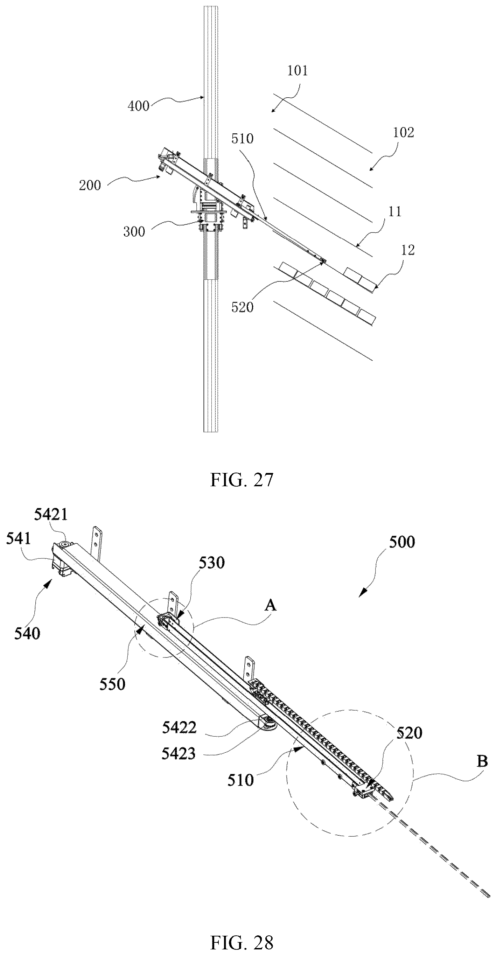

To achieve the fixation of the telescopic driving member 540, with continued reference to FIG. 28, the inventory device 500 further includes a track member 550 that is configured to support the extending structure 510 and mount the telescopic motor 541 and the synchronous belt structure 542. The extending structure 510 is movably disposed on the track member 550. The extending structure 510 has an extending state where the extending structure 510 extends outside the track member 550 and a retracting state where the extending structure 510 overlaps with the track member 550.

The track member 550 is fixed to a side of the replenishment device body 210 via multiple L-shaped second mounting plates 584.

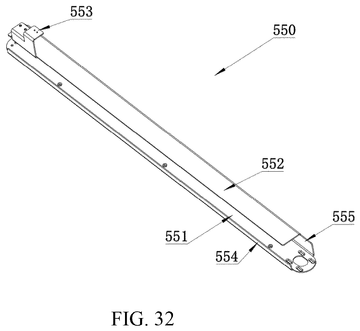

The track member 550 is roughly cubic. As shown in FIG. 32, the track member 550 includes a first side plate 554, a first mounting plate 551, a second side plate 555 and a track plate 552 that are connected in sequence. The first side plate 554 and the second side plate 555 are disposed opposite to each other, and the first mounting plate 551 and the track plate 552 are disposed opposite to each other. The height of the first side plate 554 is less than the height of the second side plate 555 so that an opening is formed between the first side plate 554 and the track plate 552 to facilitate the mounting of the synchronous belt structure 542 in the space inside the track member 550. The telescopic motor 541 is fixed below the first mounting plate 551, and both the driving wheel 5421 and the driven wheel 5423 are rotatably connected to the first mounting plate 551. The extending structure 510 is movably disposed on the upper surface of the track plate 552.

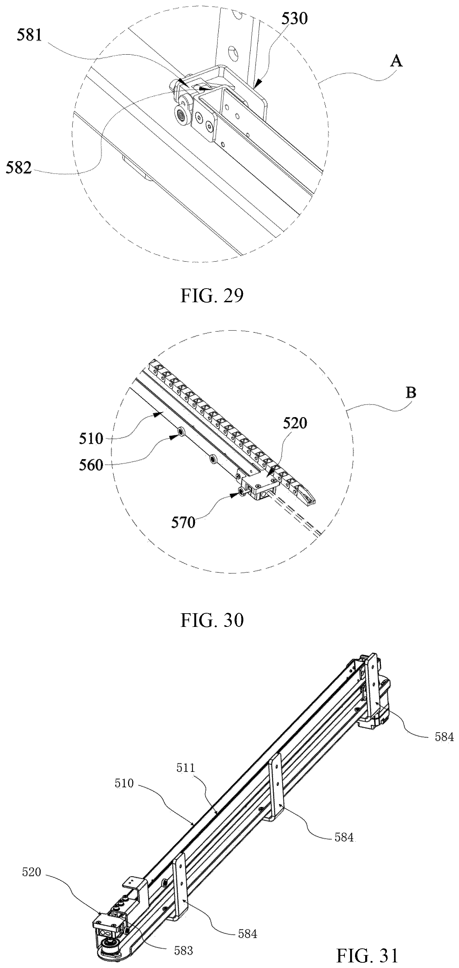

To improve the movement accuracy of the extending structure 510, as shown in FIG. 31, the inventory device 500 further includes a limit member 583. The limit member 583 is fixedly disposed relative to the replenishment device 200. A limit groove 511 is disposed on one of the limit member 583 and the extending structure 510, and a limit protruding block is disposed on the other of the limit member 583 and the extending structure 510. The limit protruding block slides and is limited in the limit groove 511, thereby guiding the extending structure 510 and preventing the extending structure 510 from swinging left and right during movement. With continued reference to FIG. 32, the track member 550 further includes a third mounting plate 553. The third mounting plate 553 is disposed above the track plate 552, and the limit member 583 is installed on the third mounting plate 553. The third mounting plate 553 is L-shaped. The track member 550 is an integrally formed member that is formed into the shape shown in FIG. 32 through cutting and bending.

To make the extending structure 510 to better adapt to the possible deformation of the storage lane 11, with continued reference to FIG. 28, the inventory device 500 further includes a moving member 530 that can move relative to the replenishment device 200. An end of the extending structure 510 facing away from the inventory structure 520 is rotatably connected to the moving member 530. In an embodiment, with continued reference to FIG. 29, one end of the moving member 530 is fixedly connected to the synchronous belt 5422, and a first hinge heat 581 is formed on the other end of the moving member 530. A second hinge seat 582 is disposed on the end of the extending structure 510, and the first hinge seat 581 and the second hinge seat 582 are hinged via a hinge shaft. In an embodiment, one end of the moving member 530 is fixed to the synchronous belt 5422 via a synchronous belt pressure plate.

Disposing in this manner makes the extending structure 510 swing up and down at a certain angle with the possible deformation of the storage lane 11 after penetrating deep into storage lane 11, thereby better adapting to the deformation of the storage lane 11, achieving that the detection direction of the inventory structure 520 is always parallel to the tangential direction of the bottom surface of the storage lane 11 and better ensuring the correctness of the detection target.

With continued reference to FIG. 30, the inventory device 500 further includes a first support wheel 560. The first support wheel 560 is rotatably connected to the extending structure 510 and rolls on the track plate 552 of the track member 550. The first support wheel 560 supports the extending structure 510 so that the stability of the movement of the extending structure 510 can be improved. Multiple first support wheels 560 are disposed and symmetrically arranged on two sides of the extending structure 510.

With continued reference to FIG. 30, the inventory device 500 further includes a second support wheel 570. The second support wheel 570 is rotatably connected to the inventory structure 520 and performs support on the track plate 552 of the track member 550. The second support wheel 570 supports the inventory structure 520 so that the inventory structure 520 can be supported at a suitable height for detection. The combination of the first support wheel 560 and the second support wheel 570 can ensure that the extending structure 510 remains straight and not lowered before the inventory structure 520 enters the storage lane 11.

The automated warehouse further includes a control mechanism, and the control mechanism may be a centralized or distributed controller. For example, the controller may be a single-chip microcontroller or composed of multiple distributed single-chip microcontrollers. The single-chip microcontroller can run a control program to control the automatic picking system 10 and the automatic replenishment system 20 to achieve their respective functions.

## Claims

1. A buffer station, comprising:
a buffer shelf (110), wherein a buffer lane (111) is slantedly disposed on the buffer shelf (110), wherein the buffer lane (111) comprises a cargo collection port (113) located at a low position of the buffer lane (111); and
a door assembly (120) comprising an upper door plate (121) rotatably connected to the cargo collection port (113), wherein the upper door plate (121) has an open position where the cargo collection port (113) is opened and a closed position where the cargo collection port (113) is closed;
wherein a cargo (12) located in the buffer lane (111) is capable of passing through the opened cargo collection port (113) under gravity.

2. The buffer station according to claim 1, wherein the buffer shelf (110) comprises a buffer bottom plate (115) for forming a bottom surface of the buffer lane (111), wherein an included angle between a short side of the buffer bottom plate (115) and a horizontal line is an acute angle.

3. The buffer station according to claim 1, wherein a plurality of buffer lanes (111) are disposed on the buffer shelf (110), an upper door plate (121) is disposed at a cargo collection port (113) of each of the plurality of buffer lanes (111), and at least part of a plurality of upper door plates (121) are capable of switching to an open position simultaneously.

4. The buffer station according to claim 1, wherein the door assembly (120) further comprises a reset elastic member (123), wherein the reset elastic member (123) has a tendency to reset the upper door plate (121) to the closed position.

5. The buffer station according to claim 4, wherein the upper door plate (121) comprises a blocking part (1211) and an abutment portion (1212) that are connected to each other at an angle, wherein the blocking part (1211) is configured to block the cargo collection port (113); and
the door assembly (120) further comprises a flipping member (122), and the flipping member (122) comprises a push plate (1221) rotatably connected to the buffer shelf (110), wherein the push plate (1221) abuts against the abutment portion (1212), the reset elastic member (123) is connected between the push plate (1221) and the buffer shelf (110), and a force is applied to the push plate (1221) to cause the push plate (1221) to rotate so that the upper door plate (121) is capable of switching from the closed position to the open position and the reset elastic member (123) is compressed.

6. The buffer station according to claim 5, wherein the flipping member (122) further comprises a connecting rod (1222) and a rotating wheel (1223), wherein the connecting rod (1222) is connected to the push plate (1221), and the rotating wheel (1223) is rotatably connected to the connecting rod (1222) and rolls on the abutment portion (1212).

7. The buffer station according to claim 6, wherein a plurality of buffer lanes (111) are disposed on the buffer shelf (110), an upper door plate (121) is disposed at a cargo collection port (113) of each of the plurality of buffer lanes (111), and two rotating wheels (1223) are disposed and rolls on abutment portions (1212) of two adjacent upper door plates (121), respectively.

8. A replenishment device, configured to collect a cargo from the buffer station according to any one of claims 1 to 7, and comprising:
a replenishment device body (210), wherein a replenishment lane (211) is slantedly disposed on the replenishment device body (210), wherein the replenishment lane (211) comprises a cargo receiving port (212) located at a high position of the replenishment lane (211), wherein the replenishment device is capable of moving to a replenishment position where the cargo receiving port (212) is directly opposite to the cargo collection port (113); and
a door pushing assembly (220) capable of driving the upper door plate (121) to switch from the closed position to the open position so that the cargo receiving port (212) and the cargo collection port (113) are docked and connected.

9. The replenishment device according to claim 8, wherein the door assembly (120) further comprises a push plate (1221) rotatably connected to the buffer shelf (110) and abutting against the upper door plate (121); and
the door pushing assembly (220) comprises a door pushing driving member (221) and a push member (222), wherein the door pushing driving member (221) is drivingly connected to the push member (222) and is configured to drive the push member (222) to move linearly, and the push member (222) is capable of causing the upper door plate (121) to switch from the closed position to the open position by pushing the push plate (1221) to rotate.

10. The replenishment device according to claim 8, wherein the replenishment device body (210) comprises a lane bottom plate (214) for forming a bottom surface of the replenishment lane (211), wherein the upper door plate (121) at the open position is capable of overlapping the lane bottom plate (214).

11. The replenishment device according to claim 10, wherein the upper door plate (121) comprises a protruding portion (12111) overlapping the lane bottom plate (214), and the replenishment device further comprises an in-place detection member (230) disposed at an end of the lane bottom plate (214) and configured to detect the protruding portion (12111).

12. The replenishment device according to claim 8, wherein
the door pushing assembly (220) is capable of driving at least two upper door plates (121) to switch from the closed position to the open position simultaneously.

13. The replenishment device according to claim 8, wherein the replenishment device body (210) comprises a lane bottom plate (214) and two lane side plates (215), wherein the lane bottom plate (214) and the two lane side plates (215) are for forming the replenishment lane (211); wherein at least one of the two lane side plates (215) is capable of moving to adjust a width of the replenishment lane (211) and/or align the cargo (12) entering the replenishment lane (211).

14. The replenishment device according to claim 13, wherein the replenishment device satisfies at least one of the following:
the replenishment device further comprises a variable pitch driving member (240), and the variable pitch driving member (240) comprises a variable pitch motor (241), a lead screw (242) and a nut block (243), wherein a motor shaft of the variable pitch motor (241) is drivingly connected to an end of the lead screw (242), the nut block (243) is threadedly connected to the lead screw (242) to form a lead screw nut pair with the lead screw (242), and the nut block (243) is connected to a movable lane side plate (215); and
the replenishment device further comprises a side plate detection member (260), wherein the side plate detection member (260) is disposed on the replenishment device body (210) and is configured to detect the lane side plate (215) reset to an initial position.

15. An automatic replenishment system, comprising:
the buffer station according to any one of claims 1 to 7; and
the replenishment device according to any one of claims 8 to 14.
